Europäisches Patentamt

European Patent Office

Office européen des brevets

(19)

(11) Numéro de publication: **0 004 484**
**B1**

(12) **FASCICULE DE BREVET EUROPEEN**

(21) Numéro de dépôt: **79400064.6**

(22) Date de dépôt: **31.01.79**

(51) Int. Cl.³: **B 60 N 1/10**

(54) Siège transformable pour véhicule automobile.

(30) Priorité: **20.03.78 FR 7808017**

(43) Date de publication de la demande:
**03.10.79 Bulletin 79/20**

(45) Mention de la délivrance du brevet:
**28.01.81 Bulletin 81/4**

(84) Etats Contractants Désignés:
**DE GB IT**

(56) Documents cités:
**FR - A - 802 993**
**FR - A - 1 254 712**
**US - A - 2 926 948**
**US - A - 3 001 820**

(73) Titulaire: **AUTOMOBILES PEUGEOT**
**75, avenue de la Grande Armée**
**F-75116 Paris (FR)**

(73) Titulaire: **SOCIETE ANONYME AUTOMOBILES CITROEN**
**117 à 167, Quai André Citroen**
**F-75747 Paris Cedex 15 (FR)**

(72) Inventeur: **Froumajou, Armand**
**Rue Laennec**
**F-95520 Osny (FR)**

(74) Mandataire: **Moncheny, Michel et al,**
**c/o Cabinet Lavoix 2 Place d'Estienne d'Orves**
**F-75441 Paris Cedex 09 (FR)**

Courier Press, Leamington Spa, England.

Siège transformable pour véhicule automobile

La présente invention concerne les sièges transformables, utilisés notamment à l'arrière des véhicules de type semi-utilitaire ou break. Elle vise plus précisément les sièges constitués par une assise articulée par sa partie inférieure avant et relevable vers l'avant et un dossier articulé à sa partie inférieure et rabattable également vers l'avant, à la place libérée par l'assise.

Pour ce genre de sièges, déjà couramment utilisés, il faut habituellement manoeuvrer successivement l'assise et le dossier. Il a pourtant déjà été prévu (voir brevet américain No 3 001 820) de relier l'assise et le dossier par une barre articulée, de telle sorte que les mouvements de l'assise et du dossier s'effectuent simultanément par une manoeuvre unique de l'opérateur.

Malheureusement, la solution proposé présente des inconvénients:

— il faut que le point d'articulation sur l'assise, de la barre de liaison, soit situé à un niveau relativement élevé, si bien que la barre représente une gêne importante pour l'accès au siège;

— il n'est pas possible d'engager l'arrière de l'assise sous la base du dossier, si bien que lorsque le coussin de l'assise est écrasé sous le poids d'un occupant, il se produit un vide entre l'assise et le dossier, par où peuvent tomber des objets posés sur l'assise, ce vide étant par ailleurs défavorable sur le plan du confort et de le présentation.

On connaît par ailleurs, d'après le brevet français No 802 993, un siège transformable comprenant une barre de liaison articulée entre l'assise et le dossier et disposée de façon à ne pas constituer une gêne l'accès au siège. En contrepartie l'arrière de l'assise ne peut, comme précédement, être engagé sous le dossier.

Enfin, le brevet américain No 2 926 948 décrit un agencement de type quelque peu différent, dans lequel l'assise est reliée dans sa partie médiane à une biellette dont l'autre extrémité est articulée sur le plancher, le dossier étant quant à lui articulé, d'une part sur l'assise et, d'autre part, sur le plancher. Il résulte de cette disposition que lors du rabattement du dossier vers l'avant, l'assise ne bascule pas autour de son bord avant mais se déplace vers l'avant, à peu près parallèlement à elle-même, pour se retrouver horizontalement, sous le dossier, à la fin du mouvement de rabattement de ce dernier.

Le mouvement de l'assise fait que le problème du dégagement de sa partie arrière ne se pose pas, non plus que celui de la commodité de l'accès. Par contre, la disposition horizontale de l'assise en position utilitaire suppose que le plancher soit très bas et nécessite la présence d'un panneau pour combler le trou qui apparaît entre le plancher et le dossier rabattu.

L'invention a pour objet un perfectionnement au siège décrit dans le premier brevet précité, ayant pour but de remédier aux inconvénients de ce siège connu.

L'invention s'applique donc à un siège transformable pour véhicule automobile, comprenant une assise relevable vers l'avant, autour d'un premier axe transversal, un dossier rabattable vers l'avant autour d'un deuxième axe transversal, et au moins une barre de liaison articulée sur l'assise et sur le dossier pour assurer la simultanéité des mouvements de ces deux éléments.

Ce siège est caractérisé en ce que le premier axe transversal est disposé à une extrémité d'au moins une biellette dont l'autre extrémité est articulée autour d'un troisième axe transversal porté par le plancher du véhicule, la ou chaque biellette ayant une orientation verticale ou proche de la verticale lorsque le siège est en position normale d'utilisation.

Suivant une autre caractéristique, la ou chaque barre de liaison est coudée en ayant sa concavité dirigée vers le haut.

Un exemple de réalisation fait l'objet de la description qui suit, en référence aux dessins joints, dans lesquels:

— la Fig. 1 est une vue latérale du siège selon l'invention, dans sa position normale d'utilisation;

— les Fig. 2 et 3 représentent le siège dans des positions intermédiaires;

— la Fig. 4 est une vue analogue après transformation complète du siège.

On a représenté sur les Fig. un plancher 1 de véhicule automobile supportant un siège arrière constitué, principalement, par une assise 2 et un dossier 3.

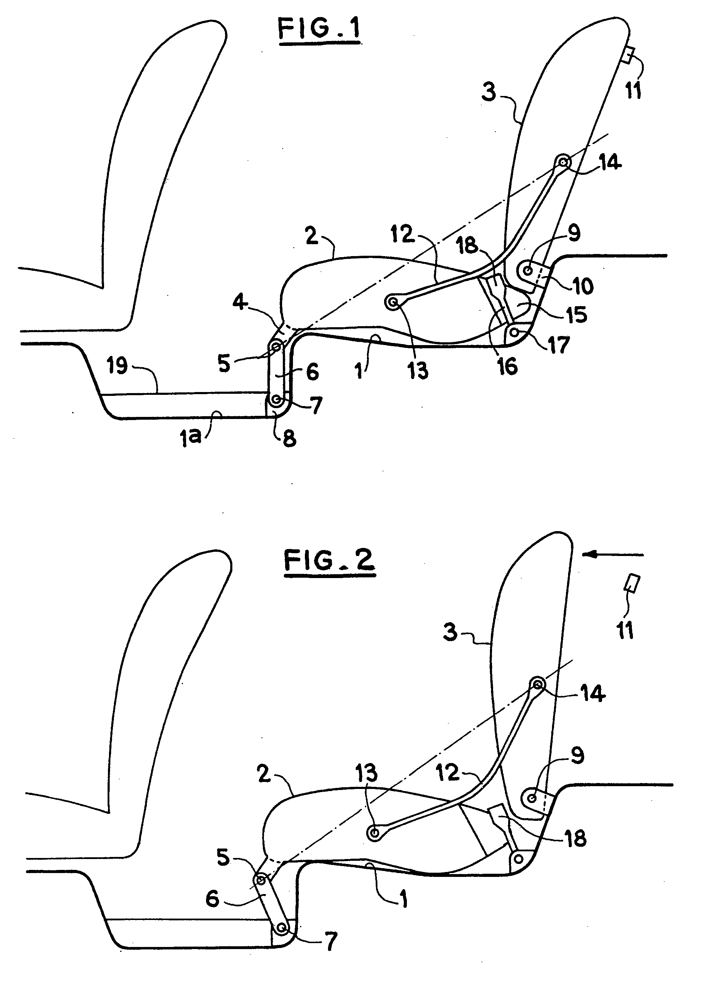

L'assise 2 repose, vers sa partie arrière, sur le plancher 1. Elle porte, sous sa partie avant, au moins un bec 4 articulé sur un axe transversal 5 porté par une extrémité d'une biellette 6 articulée sur un axe transversal 7 porté par une chape 8 solidaire du plancher 1. Lorsque le siège occupe sa position normale d'utilisation, comme représenté à la Fig. 1, la biellette 6 a une orientation sensiblement verticale. On peut prévoir une ou deux biellettes disposées au voisinage de la partie médiane de l'assise, ou bien deux biellettes placées chacune à une extrémité de cette assise.

Le dossier 3 est articulé, à sa base, autour d'un axe transversal 9 porté par une chape 10 solidaire du plancher 1. En position normale d'utilisation, ce dossier s'appuie, à sa partie supérieure, sur des butées 11 solidaires de la carrosserie, tout moyen connu approprié pouvant être utilisé pour verrouiller le dossier dans cette position.

De chaque côté du siège il est prévu une barre de liaison 12, articulée en 13 sur l'assise et en 14 sur le dossier. La barre 12 est coudée en ayant sa concavité dirigée vers le haut, comme représenté sur les Fig. pour dégager complètement l'accès au siège.

L'arrière de l'assise 2 est engagé sur une longueur suffisante sous la base du dossier 3 de façon à éviter la formation d'un vide entre ces deux parties.

Eventuellement, une encoche 15, de faibles dimensions, peut être ménagée vers le bord arrière de l'assise 2, pour laisser le passage à des bras 16 articulés en 17 sur le plancher 1 et munis de moyens d'accrochage 18 pour des ceintures de sécurité, non représentées.

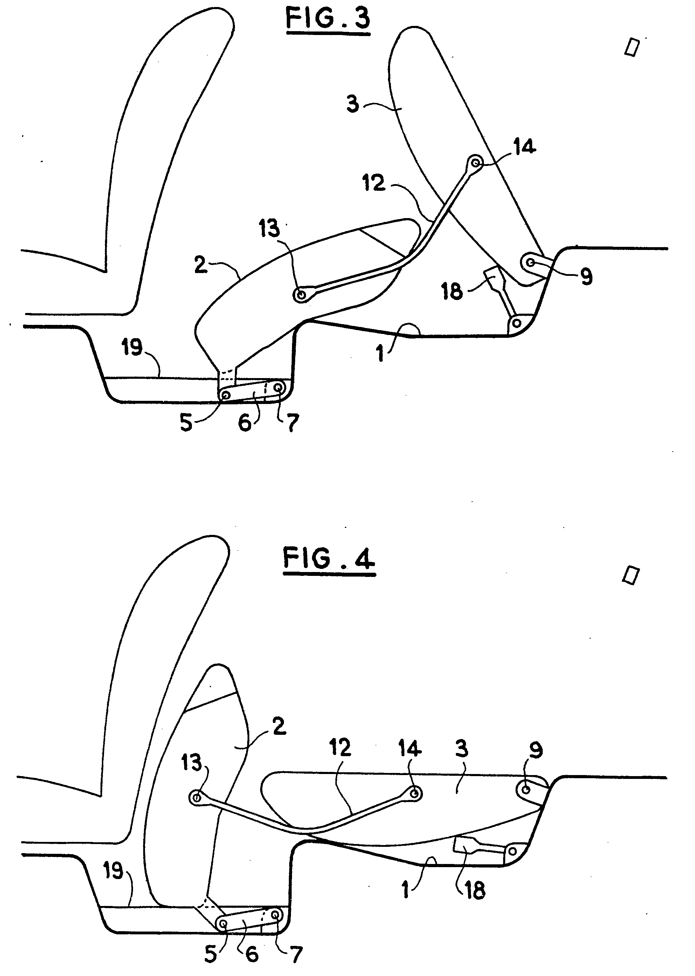

Dans la position d'utilisation normale de la Fig. 1, l'axe d'articulation 13 se trouve au dessous de la ligne joignant les traces des axes 5 et 14. En partant de cette position, lorsqu'on veut accroître le volume de chargement du véhicule, il suffit, après avoir déverrouillé le dossier, d'exercer une pousée vers l'avant à sa partie supérieure pour amener l'ensemble dans la position finale représentée sur la Fig. 4.

Les différentes phases de ce mouvement sont les suivantes:

Dans la première partie du déplacement du dossier 3 vers l'avant le bras 12 repousse l'assise qui fait basculer la biellette 6. Au cours de cette phase l'assise se déplace vers l'avant suivant un mouvement proche de l'horizontale, ce qui dégage parfaitement l'arrière à la fois de la base du dossier et des bras 16 d'accrochage des ceintures de sécurité (Fig. 2).

Le mouvement étant poursuivi, la biellette 6 continue à s'incliner vers l'avant, ce qui abaisse la partie avant de l'assise, tandis que sa partie arrière, glissant sur une partie ascendante du plancher 1 est repoussée vers la haut: le relevage de l'assise ets amorcé.

La rotation de la biellette 6 est stoppée lorsque son extrémite portant l'axe 5 est en butée contre la partie 1ᵃ du plancher 1. Dans cette position (Fig. 3), on voit que l'articulation 13 se trouve alors nettement au dessus de la ligne joignant les articulations 5 et 14. Le mouvement peut donc se poursuivre, sans risque d'arc-boutement, jusqu'à la position de la Fig. 4.

On voit que l'agencement décrit répond bien à l'objectif que l'on s'était fixé, ceci grâce à la mobilité de l'axe transversal 5 de pivotement de l'assise. En effet, c'est cette mobilité qui permet d'assurer le dégagement de l'assise vers l'avant et de placer l'articulation 13 relativement bas, tout en l'amenant nettement au-dessus de la ligne reliant les articulations 5 et 14 lorsque la biellette 6 est parvenue en butée.

Dans l'exemple décrit, on a supposé que l'arrêt de la biellette 6 était assuré par appui sur le plancher 1. Le même résultat serait obtenu par appui de l'avant de l'assise 2 sur une nervure longitudinale 19 du plancher 1, nervure constituant un tunnel pour le passage d'une transmission entre un groupe moto-propulseur placé à l'avant du véhicule et un train arrière moteur.

La description du fonctionnement très simple de ce dispositif permet de constater que les objectifs recherchés sont parfaitement atteints.

## Revendications

1. Siège transformable pour véhicule automobile, comprenant une assise (2) relevable vers l'avant autour d'un premier axe transversal (5), un dossier (3) rabattable vers l'avant autour d'un deuxième axe transversal (9) et au moins une barre de liaison (12) articulée sur l'assise (2) et sur le dossier (3) pour assurer la simultanéité des mouvements de ces deux éléments, caractérisé en ce que le premier axe transversal (5) est disposé à une extrémité d'au moins une biellette (6) dont l'autre extrémité est articulée autour d'un troisième axe transversal (7) porté par le plancher (1) du véhicule, la ou chaque biellette ayant une orientation verticale ou proche de la verticale lorsque le siège est en position normale d'utilisation.

2. Siège transformable suivant la revendication 1, caractérisé en ce que la ou chaque barre de liaison (12) est coudée et sa concavité est dirigée vers le haut.

3. Siège transformable suivant l'une quelconque des revendications 1 et 2, caractérisé en ce qu'il est prévu des moyens de butée (1ᵃ; 19) limitant le mouvement de basculement de la ou chaque biellette.

4. Siège transformable suivant la revendication 3, caractérisé en ce que dans la position d'utilisation normale du siège l'axe (13) d'articulation de la barre de liaison (12) sur l'assise se trouve au-dessous de la droite joignant l'axe (5) d'articulation de l'assise sur la biellette (6) à l'axe (14) d'articulation de la barre (12) sur le dossier (3), tandis que dans la position pour laquelle la biellette (6) occupe sa position de basculement extrême, l'axe (13) se trouve au-dessus de ladite droite.

5. Siège transformable suivant l'un quelconque des revendications 1 à 4, caractérisé en ce que l'assise (2) comporte à sa partie arrière des logements (15) pour des bras (16) portant des moyens (18) d'accrochage de ceintures de sécurité.

## Claims

1. Convertible seat structure for an automobile vehicle, comprising a seat (2) forwardly raisable about a first transverse axis (5), a backrest (3) which can be swung over forwardly about a second transverse axis (9) and at least one connecting bar (12) pivoted to the seat and to the backrest (3) to ensure that the movements of these two elements are simultaneous, characterized in that the first transverse axis (5) is located at one end of at least one link (6) having its other end pivoted about a third transverse axis (7) supported by the vehicle floor (1), the or each link having a vertical or substantially vertical orientation when the seat structure is in the normal position of use.

2. Convertible seat structure as claimed in claim 1, characterized in that the or each connecting bar (12) is cranked and has a concave side which faces upwardly.

3. Convertible seat structure as claimed in claim 1 or 2, characterized in that abutment means (1a; 19) are provided for limiting the pivotal movement of the or each link.

4. Convertible seat structure as claimed in claim 3, characterized in that in the normal position of use of the seat structure, the pivotal connection of the connecting bar to the seat is located below the line intersecting the pivotal connection (5) of the seat to the link (6) and the pivotal connection (14) of the bar (12) to the backrest, whereas, in the position in which the link occupies its extreme swung position, the pivotal connection (13) of the bar to the seat is located above said line.

5. Convertible seat structure as claimed in any one of claims 1 to 4, characterized in that the seat (2) has in the rear part thereof recesses (15) for arms (16) carrying means (18) for attaching safety belts.

**Patentansprüche**

1. Umwandelbarer Sitz für Kraftfahrzeuge, mit einem um eine erste quer verlaufende Welle (5) nach vorne hochklappbaren Sitzflächenteil (2), einer um eine zweite quer verlaufende Welle (9) nach vorne herunterklappbaren Lehne (3) und wenigstens einer am Sitzflächenteil (2) und an der Lehne (3) angelenkten Verbindungsstange (12) zur Herstellung einer Gleichzeitigkeit der Bewegungen dieser beiden Teile, dadurch gekennzeichnet, daß die erste quer verlaufende Welle (5) an dem einen Ende wenigstens eines Schwenkarms (6) vorgesehen ist, dessen anderes Ende um eine am Fahrzeugboden (1) sitzende dritte quer verlaufende Welle (7) schwenkbar ist, wobei der wenigstens eine Schwenkarm vertikal oder nahezu vertikal liegt, wenn sich der Sitz in Normalstellung befindet.

2. Umwandelbarer Sitz nach Anspruch 1, dadurch gekennzeichnet, daß die mindestens eine Verbindungsstange (12) gekrümmt und mit ihrer Konkavität nach oben gerichtet ist.

3. Umwandelbarer Sitz nach Anspruch 1 oder 2, dadurch gekennzeichnet, daß eine die Kippbewegung des mindestens einen Schwenkarmes begrenzende Anschlageinrichtung (1a; 19) vorgesehen ist.

4. Umwandelbarer Sitz nach Anspruch 3, dadurch gekennzeichnet, daß in Normalstellung des Sitzes die Welle (13), an der die Verbindungsstange (12) am Sitzflächenteil angelenkt ist, unter der Geraden liegt, die die Welle (5), an der das Sitzflächenteil am Schwenkarm (6) angelenkt ist, und die Welle (14), an der die Stange (12) an der Lehne (3) angelenkt ist, verbindet, während in der Stellung, für die der Schwenkarm (6) seine extreme Kippstellung einnimmt, die Welle (13) unter dieser Geraden liegt.

5. Umwandelbarer Sitz nach einem der Ansprüche 1 bis 4, dadurch gekennzeichnet, daß das Sitzflächenteil (2) in seinem hinteren Teil Aufnahmen (15) für Arme (16), die eine Einrichtung (18) zum Einhaken von Sicherheitsgurten tragen, aufweist.

0 004 484

## FIG.1

## FIG.2

1

## FIG. 3

## FIG. 4